# EUROPÄISCHE PATENTSCHRIFT

(11) **EP 3 333 465 B1**
(45) Veröffentlichungstag und Bekanntmachung des Hinweises auf die Patenterteilung: **04.09.2019**
(21) Anmeldenummer: 17202198.2
(22) Anmeldetag: 17.11.2017
(51) Int. Cl.: F16K 27/02

(54) **ANTRIEBSBAUGRUPPE EINES MEMBRANVENTILS UND VERFAHREN ZUR MONTAGE EINER ANTRIEBSBAUGRUPPE**
DRIVE ASSEMBLY OF A DIAPHRAGM VALVE AND METHOD FOR MOUNTING A DRIVE ASSEMBLY
ENSEMBLE D'ENTRAÎNEMENT D'UNE SOUPAPE À MEMBRANE ET PROCÉDÉ DE MONTAGE D'UN ENSEMBLE D'ENTRAÎNEMENT

(30) Priorität: 06.12.2016 DE 102016123606
(43) Veröffentlichungstag der Anmeldung: 13.06.2018
(73) Patentinhaber: GEMÜ Gebr. Müller Apparatebau GmbH & Co. Kommanditgesellschaft, 74653 Ingelfingen (DE)
(72) Erfinder: HAIDT, Harald, 74613 Öhringen (DE)
(74) Vertreter: DREISS Patentanwälte PartG mbB

(56) Entgegenhaltungen:
- DE-A1-102012 112 565
- DE-A1-102015 202 775
- JP-A- 2007 046 725
- US-A- 5 002 086
- US-A1- 2015 354 718
- US-B2- 9 016 307

## Beschreibung

Die Erfindung betrifft eine Antriebsbaugruppe eines Membranventils nach dem Oberbegriff des Anspruchs 1 sowie ein Verfahren zur Montage einer Antriebsbaugruppe nach dem Oberbegriff eines nebengeordneten Anspruchs.

Membranventile sind allgemein bekannt. Eine Antriebsbaugruppe umfasst einen Klemmabschnitt zu einem Verklemmen einer mit einem Ventilkörper zusammenwirkenden Membran.

Aus der DE 20 2013 102 526 U1 ist ein Membranventil bekannt, bei dem ein Antriebsgehäuse sich so gestalten lässt, dass insbesondere Steuerfluidanschlüsse, aber auch beispielsweise ein Display zusammen mit dem Antriebsgehäuse verdrehbar sind. Fluidleitungen und Verkabelung innerhalb des Antriebsgehäuses müssen daher nicht auf eine Verdrehung ausgelegt werden. Dennoch wird durch die Option der unbegrenzten Verdrehung des gesamten Antriebsgehäuses bezüglich der Armatur die Montage des Membranventils an dessen vorgesehenen Einbauposition vereinfacht.

US5002086 offenbart ein frei entleerendes, korrosionsbeständiges Ventil zur Regelung des Durchflusses von korrosiven Flüssigkeiten mit einem Kunststoffventilgehäuse.

JP2007046725 offenbart ein Öffnungs- und Schließventil mit einem Strömungskanal, einem Ventilkörper mit einem Ventilsitz und mit einem ersten Strömungskanal, der mit einer am Ventilsitz ausgebildeten Verbindungsöffnung verbunden ist.

DE102015202775 offenbart ein Membranventil mit einem Einlass und einem Auslass, einem einen Ventilkörper aufweisenden Gehäuseunterteil und einem am Gehäuseunterteil befestigten Gehäuseoberteil.

US9016307 offenbart ein Membranventil, welches einen Ventilkörper mit einem zu öffnenden Durchgang aufweist.

Mithin besteht die Aufgabe der Erfindung darin, eine Montage einer Antriebsbaugruppe zu verbessern.

Die der Erfindung zugrunde liegende Aufgabe wird durch eine Antriebsbaugruppe nach dem Anspruch 1 sowie durch ein Verfahren zur Montage der Antriebsbaugruppe nach einem neben geordneten Anspruch gelöst.

Es wird vorgeschlagen, dass ein Spannstück derart ausgebildet ist, sodass durch eine Verdrehung des Spannstücks in eine Montage-Drehrichtung um eine Zustellachse das Spannstück zumindest entlang der Zustellachse zu dem Ventilkörper festlegbar ist, und dass ein Einschraubende derart in das Spannstück in die Montage-Drehrichtung um die Zustellachse einschraubbar ist, so dass das Einschraubende den Klemmabschnitt mit Druck belastet und damit die Membran zwischen dem Klemmabschnitt und dem Ventilkörper verklemmbar ist.

Durch diese Art der Klemmung können eine erhöhte Klemmwirkung für das jeweilige Membranventil erreicht werden. Ebenfalls ermöglicht die Klemmung eine erhöhte Membranlebensdauer. Durch die vorgeschlagene Anordnung des Spannstücks an dem Ventilkörper entfällt ein entsprechender Befestigungsflansch. Sichtbare Verschraubungen können somit entfallen, was eine Abreinigbarkeit der Oberflächen verbessert.

Weiters wird der nötige Bauraum reduziert und eine Anordnung der Antriebsbaugruppe am Ventilkörper vereinfacht. Über das an dem Einschraubende wirkende Drehmoment kann die Verklemmung der Membran eingestellt werden.

Beispielsweise bei einer engen Anordnung mehrerer Ventilkörper herrscht eine beengte Montageraumsituation. Das Spannstück kann zunächst an dem Ventilkörper entlang der Zustellachse angeordnet werden, um anschließend das Einschraubende in das Spannstück einzuschrauben. Die Montage kann somit entlang eines gedachten Zylinders um die Zustellachse erfolgen. Wesentlicher Vorteil ist somit, dass sich eine Montage und Demontage der Antriebsbaugruppe vereinfacht.

Gemäß einer vorteilhaften Ausführungsform wird vorgeschlagen, dass das Spannstück innerhalb eines Gehäuseabschnitts angeordnet ist, welcher zwischen einem Antriebsgehäuse und dem Ventilkörper angeordnet ist. Hierbei ergeben sich Vorteile bei der Abreinigbarkeit der äußeren Oberflächen. Darüber hinaus ermöglicht der Gehäuseabschnitt eine funktionale Entkopplung zwischen der Zurverfügungstellung eines Gehäuses zur verbesserten Abreinigbarkeit und der Funktion des Spannstücks.

Gemäß einer weiteren vorteilhaften Ausführungsform wird vorgeschlagen, dass sich eine Oberfläche des Gehäuseabschnitts und/oder des Spannstücks im Wesentlichen bündig an eine Oberfläche des Antriebsgehäuses und/oder bündig an eine Oberfläche des Ventilkörpers anschließt. Hierdurch ergeben sich Vorteile bei der Abreinigbarkeit der äußeren Oberflächen.

Eine weitere vorteilhafte Ausführungsform zeichnet sich dadurch aus, dass das Spannstück in Richtung des Ventilkörpers durch ein Zwischenstück geführte Verbindungsmittel umfasst, wobei das Zwischenstück sich an dem Einschraubende abstützt. Vorteile ergeben sich hierbei durch erhöhte Toleranzbereiche bei den Abmessungen des Spannstücks in Zustellrichtung. Darüber hinaus verringert sich durch das Vorsehen des Zwischenstücks die Anzahl der Teile. Mithin wird eine günstige Ausführung der Antriebsbaugruppe bereitgestellt.

Eine weitere vorteilhafte Ausführungsform zeichnet sich dadurch aus, dass der Klemmabschnitt sich unmittelbar an dem Einschraubende abstützt. Durch diese statische Verklemmung der Membran werden Druckstöße des Fluides innerhalb des Fluidkanals besser absorbiert.

In einer weiteren vorteilhaften Ausführungsform wird vorgeschlagen, dass der Klemmabschnitt sich mittels einer Vorspanneinrichtung an dem Einschraubende abstützt. Durch diese dynamische Klemmung der Membran wird die dauerhafte Dichtheit der Verklemmung nach außen hin gewährleistet.

Eine vorteilhafte Ausführungsform zeichnet sich dadurch aus, dass das Spannstück einen Verbindungsabschnitt umfasst, welcher derart ausgebildet ist, um eine Steck-Dreh-Verbindung zwischen dem Spannstück und dem Ventilkörper herzustellen. Die Steck-Dreh-Verbindung stellt eine einfache Verbindungsart bereit, welche die Montage vereinfacht.

In einer vorteilhaften Weiterbildung wird vorgeschlagen, dass die Steck-Dreh-Verbindung eine Steckposition des Spannstücks zu dem Ventilkörper bereitstellt, in welcher sich das Spannstück und der Ventilkörper entlang der Zustellachse bewegen lassen, wobei die Steck-Dreh-Verbindung eine Drehposition des Spannstücks zu dem Ventilkörper bereitstellt, in welcher eine Bewegung des Spannstücks und des Ventilkörpers zueinander entlang der Zustellachse begrenzt ist. Damit wird eine Bajonett-artige Verbindung zwischen Ventilkörper und Spannstück erreicht.

Gemäß einer vorteilhaften Weiterbildung wird vorgeschlagen, dass das Spannstück zwischen der Steckposition und der Drehposition einen Winkel kleiner 45°, insbesondere kleiner 30° und insbesondere kleiner 25°, durchläuft. Der durchlaufende Winkel reicht vorteilhaft aus, um die formschlüssige Verbindung zwischen Spannstück und Ventilkörper herzustellen.

In einer vorteilhaften Ausführungsform wird vorgeschlagen, dass die Antriebsbaugruppe eine Angriffskontur zum Angreifen eines Werkzeugs umfasst, um ein in die Montage-Drehrichtung gerichtetes Drehmoment in die Antriebsbaugruppe einzubringen. Durch Drehen des angreifenden Werkzeugs in die Montage-Richtung wird auf einfache Art und Weise sowohl der Formschluss zwischen Ventilkörper und Spannstück als auch die Klemmung der Membran erreicht.

In einer vorteilhaften Weiterbildung ist vorgesehen, dass die Angriffskontur drehfest mit dem Antriebsgehäuse verbunden ist, wobei das Einschraubende drehfest mit dem Antriebsgehäuse verbunden ist. Vorteilhaft kann somit ein von außen zugeführtes Drehmoment von der Angriffskontur in das Einschraubende eingeleitet werden.

Eine vorteilhafte, alternative Weiterbildung zeichnet sich dadurch aus, dass die Angriffskontur drehfest mit einem Handmittel zur manuellen Verstellung einer Membranposition verbunden ist, wobei mittels eines Verriegelungsglieds das Einschraubende und die Angriffskontur zur Montage/Demontage drehfest miteinander verbindbar sind. Damit wird die vorteilhafte Montage und Verklemmung der Membran auch für handbetriebene Membranventile ermöglicht.

Eine besonders vorteilhafte Ausführungsform zeichnet sich dadurch aus, dass ein Pneumatikkolben innerhalb eines Zylinders geführt eine Ventilspindel bewegt, wobei ein Anschlussring um die Zustellachse drehbar an dem Antriebsgehäuse gelagert ist, wobei der Anschlussring einen Steuerluftanschluss umfasst, dessen Öffnung in einen durch den Anschlussring und das Antriebsgehäuse gebildeten Steuerluftkanal führt, und wobei der Steuerluftkanal und ein Zylinderraum des Zylinders fluidführend miteinander verbunden sind. Besonders vorteilhaft ergibt sich so eine freie Verdrehbarkeit des Steuerluftanschlusses, der trotz der vorgeschlagenen Art der Anordnung der Antriebsbaugruppe eine Wahl zur Steuerluftzuführung zulässt. Hierdurch kann die Stellung des Steuerluftanschlusses vorteilhaft an die jeweilige Montageraumsituation angepasst werden.

Ein weiterer Aspekt betrifft ein Verfahren zur Montage einer Antriebsbaugruppe eines Membranventils an einem Ventilkörper, wobei die Antriebsbaugruppe einen Klemmabschnitt zu einem Verklemmen einer mit dem Ventilkörper zusammenwirkenden Membran umfasst. Durch eine Verdrehung eines Spannstücks in eine Montage-Drehrichtung um eine Zustellachse wird das Spannstück zumindest entlang der Zustellachse zu dem Ventilkörper festgelegt wird. Ein Einschraubende wird in das Spannstück in die Montage-Drehrichtung um die Zustellachse derart eingeschraubt, so dass das Einschraubende den Klemmabschnitt mit Druck belastet und damit die Membran zwischen dem Klemmabschnitt und dem Ventilkörper verklemmt.

Weitere vorteilhafte Ausführungsformen und Merkmale finden sich in der nachfolgenden Beschreibung der Zeichnung, wobei auch bei unterschiedlichen Ausführungsformen die gleichen Bezugszeichen verwendet werden. In der Zeichnung zeigen:
- Figur 1: eine schematische perspektivische Ansicht eines Membranventils;
- Figuren 2, 4 und 5: jeweils eine schematische Schnittansicht eines Membranventils;
- Figur 3: eine schematische Schnittansicht einer Antriebsbaugruppe;
- Figur 6: eine schematische Schnittansicht eines Membranventils gemäß einem Schnitt aus Figur 2;
- Figur 7: eine schematische Ansicht auf eine Antriebsbaugruppe entgegen einer Zustellrichtung; und
- Figuren 8 und 9: jeweils ein schematisches Ablaufdiagramm.

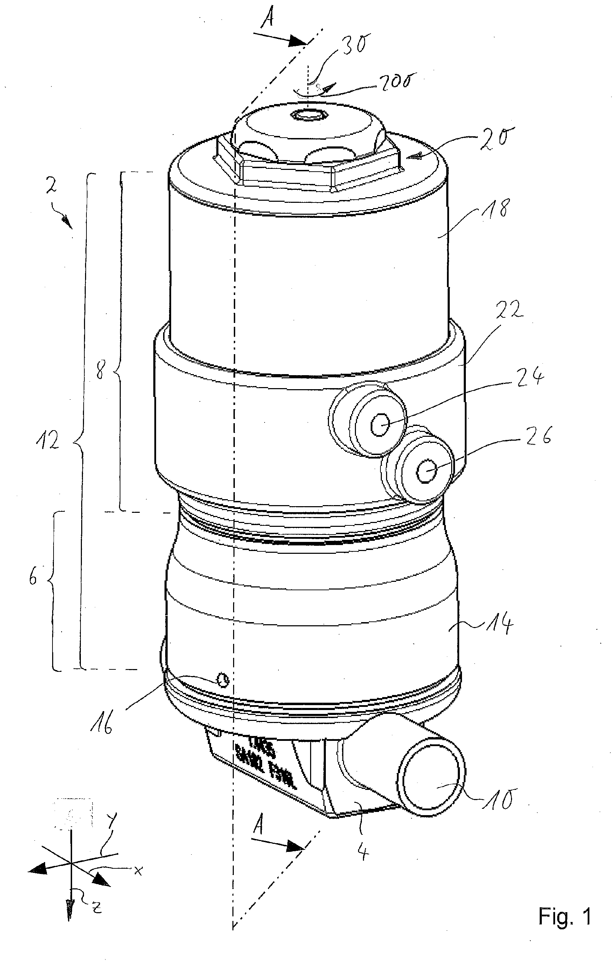

Figur 1 zeigt in einer schematischen perspektivischen Ansicht ein Membranventil 2. Das Membranventil 2 umfasst einen Ventilkörper 4, einen Zwischenabschnitt 6 und einen Antriebsabschnitt 8. Der Ventilkörper 4 umfasst einen Fluidkanal 10, welcher öffen- und schließbar ist. Auf dem Ventilkörper 4 ist eine Antriebsbaugruppe 12, welche den Zwischenabschnitt 6 und den Antriebsabschnitt 8 umfasst, montiert.

Der Zwischenabschnitt 6 umfasst einen zumindest während der Montage um eine Zustellachse 30 drehbaren Gehäuseabschnitt 14 mit einer Leckageöffnung 16. Die Leckageöffnung 16 kann mit einem radial verlaufenden Innengewinde versehen sein, um eine kontrollierte Abführung von Leckagefluid zu ermöglichen. Der Antriebsabschnitt 8 umfasst ein Antriebsgehäuse 18, an welches eine Angriffskontur 20 angeformt ist. Die Angriffskontur 20 ist vorliegend als sechskantige Angriffskontur ausgebildet. Über die Angriffskontur 20 ist ein Drehmoment in die Antriebsbaugruppe 12 einbringbar. Insbesondere ist eine Montage-Drehrichtung 200 zur Montage der Antriebsbaugruppe 12 gezeigt. Das Antriebsgehäuse 18 ist von einem Anschlussring 22 umgeben, welcher Steuerluftanschlüsse 24 und 26 bereitstellt. Die Öffnungen der jeweiligen Steuerluftanschlüsse 24 und 26 führen in einen jeweiligen Steuerluftkanal.

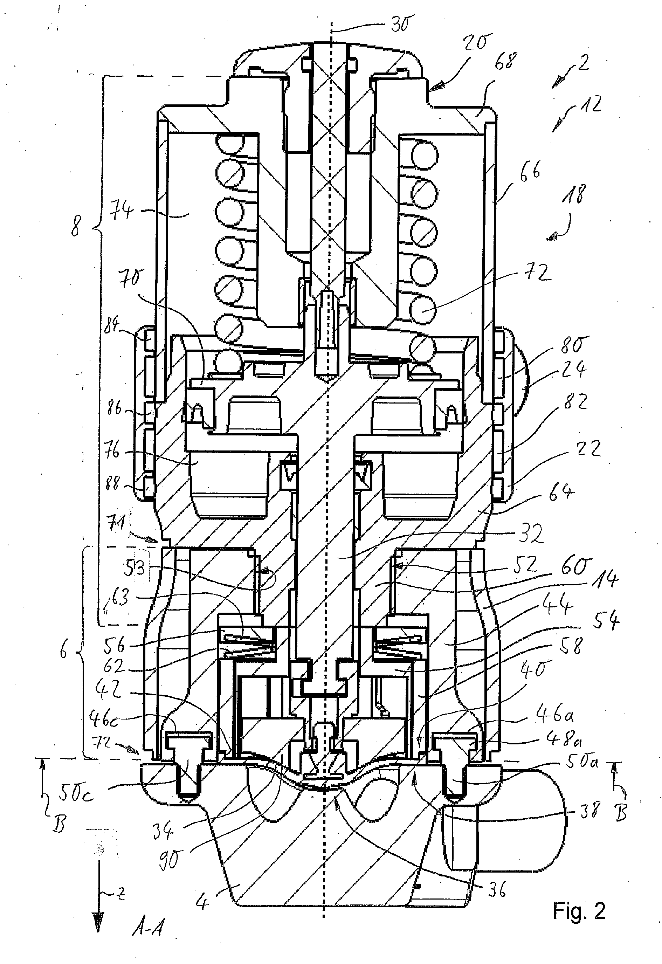

Figur 2 zeigt eine schematische Schnittansicht des Membranventils 2 aus Figur 1 gemäß einem Schnitt A-A. Das Membranventil 2 ist im Wesentlichen rotationssymmetrisch um die Zustellachse 30 aufgebaut. Eine entlang der Zustellachse 30 geführte Ventilspindel 32 bewegt eine Membran 34 auf einen Ventilsitz 36 des Ventilkörpers 4 zu bzw. von dem Ventilsitz 36 weg, um den Kanal 10 zu schließen bzw. zu öffnen. Eine radial nach außen orientierter Klemmabschnitt der Membran 34 wird zwischen einem Klemmabschnitt 38 des Ventilkörpers 4 und zwei antriebsseitigen Klemmabschnitten 40 und 42 verklemmt.

Der Zwischenabschnitt 6 umfasst ein Spannstück 44. Das Spannstück 44 umfasst lotrecht zur Zustellachse 30 verlaufende Nuten 46. Die Nuten 46 weisen abschnittsweise einen jeweiligen Hinterschnitt auf, um darin einen Kopf 48 eines starr mit dem Ventilkörper 4 verbundenen Verbindungsmittels 50 aufzunehmen. Das Verbindungsmittel 50 ragt mit dem Kopf 48 entgegen einer Zustellerrichtung z von dem Ventilkörper 4 ab. Die Bajonettbahn-artig ausgebildeten Nuten 46 sind auch als Verbindungsmittel bezeichenbar. Selbstverständlich können auch Köpfe von dem Spannstück 44 abragen, um in entsprechende, einen Hinterschnitt aufweisende Nuten des Ventilkörpers 4 einzugreifen.

Die Antriebsbaugruppe 12 wird in einer Steckposition auf den Ventilkörper 4 aufgesteckt, was im Wesentlichen entlang der Zustellachse 30 geschieht. Nach dem Aufstecken der Antriebsbaugruppe 12 wird die Antriebsbaugruppe 12 aus der Steckposition heraus in die in Figur 2 gezeigte Drehposition gedreht, wobei der Ventilkörper 4 in seiner Position verharrt. In der Drehposition greifen die Köpfe 48 der Verbindungsmittel 50 in den jeweiligen Hinterschnitt der Nuten 46. In der Drehposition ist das Spannstück 44 entlang der Zustellachse 30 formschlüssig zu dem Ventilkörper 4 festgelegt. Damit wird eine lösbare Steck-Dreh-Verbindung zwischen dem Ventilkörper 4 und dem Spannstück 44 geschaffen.

Alternativ zu den Nuten 46 und den in die Nuten 46 eingreifenden Verbindungsmitteln 50 kann das Spannstück 44 auch mittels einer Einschraubverbindung, d.h. über korrespondierende Gewinde, zu dem Ventilkörper 4 festgelegt werden.

Das Spannstück 44 weist auf der dem Ventilkörper 4 abgewandten Seite ein Innengewinde 52 auf, in welches ein Außengewinde 53 eines Einschraubendes 60 eingreift. Damit ist das Einschraubende 60 in das Spannstück 44 eindrehbar. Bei der Eindrehung des ein Einschraubendes 60 wird das Einschraubende 60 in Zustellrichtung z bewegt und stützt sich dabei über das das Spannstück 44 an dem Ventilkörper 4 ab. Das Einschraubende 60 bewirkt bei der Eindrehung einen Druck auf eine radial innen liegende Klemmbüchse 54 und ein ringförmiges Gegenlagerelement 56. Das Einschraubende 60 wird bis auf Anschlag in das Spannstück 44 eingedreht. Die innenliegende Klemmbüchse 54 umfasst den Klemmabschnitt 42. Eine den Klemmabschnitt 40 umfassende außenliegende Klemmbüchse 58 stützt sich mittels zweier Tellerfedern 62, 63 an dem Gegenlagerelement 56 ab.

Das Einschraubende 60 ist einstückig mit einem unteren Teil 64 des Antriebsgehäuses 18 verbunden. Das Antriebsgehäuse 18 umfasst einen oberes Teil 66, welches mit einem die Angriffskontur 20 aufweisenden Deckel 68 verschlossen ist. Die Angriffskontur 20 steht über die Teile 66 und 64 in drehfester Verbindung mit dem Einschraubende 60.

Der Gehäuseabschnitt 14 umgibt das Spannstück 44. Das untere Teil 64 des Antriebsgehäuses 18 umfasst eine vom Ventilkörper 4 abgewandt angeordnete, kreisringförmige Nut 71 zu einer fluiddichten Verbindung zwischen dem unteren Teil 64 und dem Gehäuseabschnitt 14 mittels eines in die Nut 71 eingebrachten O-Rings. Der Gehäuseabschnitt 14 weist eine in Richtung des Ventilkörpers 4 orientiert angeordnete kreisringförmige Nut 72 auf, um darin einen O-Ring zur fluiddichten Abdichtung zwischen dem Gehäuseabschnitt 14 und dem Ventilkörper 4 anzuordnen. Bei der Eindrehung des Einschraubendes 60 stützt sich der Gehäuseabschnitt 14 an dem unteren Teil 64 ab und drückt den in der Nut 72 befindlichen, nicht gezeigten O-Ring auf den Ventilkörper 4. Die äußere Oberfläche des Gehäuseabschnitt 14 schließt im Wesentlichen bündig mit einer äußeren Oberfläche des unteren Teils 64 ab. Die äußere Oberfläche des Gehäuseabschnitt 14 schließt im Wesentlichen bündig mit einer äußeren Oberfläche des Ventilkörpers 4 ab. Des Weiteren ist es möglich, in dem Zwischenabschnitt 6, beispielsweise innerhalb des Spannstücks 44, ein nicht gezeigtes Wegemesssystem anzuordnen, um den Hub der Ventilspindel 32 zu erfassen.

Innerhalb des Antriebsgehäuses 18 ist ein Pneumatikkolben 70 innerhalb eines Zylinders geführt und bewegt die Ventilspindel 32. Der Pneumatikkolben 70 wird mittels einer Druckfeder 72 in Zustellrichtung z gedrückt. Der Pneumatikkolben 70 begrenzt einen ersten und einen zweiten Zylinderraum 74 und 76. Der Anschlussring 22 ist im Wesentlichen beliebig um die Zustellachse 30 drehbar an dem Antriebsgehäuse 18 gelagert. Der Anschlussring 22 umfasst innenliegende Nuten 80,82, welche die kreisringförmigen Steuerluftkanäle zwischen dem Anschlussring 22 und dem Antriebsgehäuse 18 bilden. Des Weiteren umfasst der Anschlussring 22 innenliegende Nuten 84, 86 und 88, in welche O-Ringe zur Abdichtung eingebracht werden. Das untere Teil 64 umfasst zu den Nuten 86 und 88 korrespondierende ringförmige Außennuten, um den Anschlussring 22 über die nicht gezeigten O-Ringe in den Nuten 86 und 88 zu dem Antriebsgehäuse 18 festzulegen.

Die Öffnungen der jeweiligen Steuerluftanschlüsse 24 und 26 führen in den jeweiligen Steuerluftkanal gemäß der frei bleibenden Nuten 80 und 82. Im Bereich der Nuten 80 und 82 umfasst das obere Teil 66 und das untere Teil 64 jeweils einen bevorzugt radial verlaufenden Stich. Über diesen Stich wird der dem Ventilkörper 4 zugewandte ringförmige Steuerluftkanal gemäß der Nut 82 mit dem Zylinderraum 76 fluidführend verbunden. Der ringförmige Steuerluftkanal gemäß der Nut 80 wird durch den korrespondierend radialen Stich mit dem Zylinderraum 74 fluidführend verbunden.

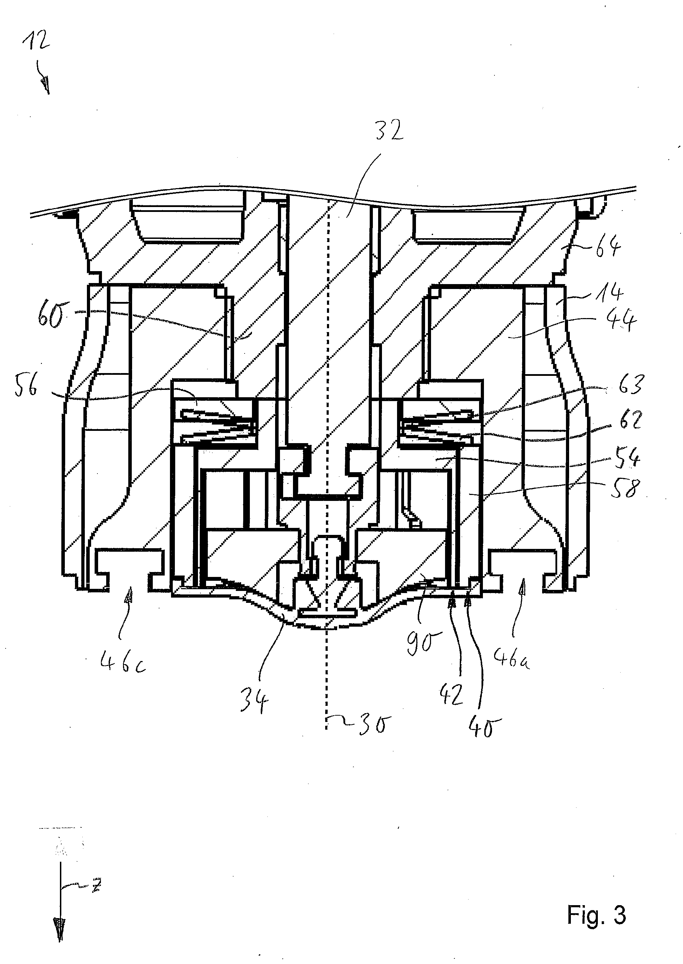

Figur 3 zeigt in einer schematischen Schnittansicht die Antriebsbaugruppe 12 in einem Vormontage-Zustand vor einer Anordnung an dem Ventilkörper 4. In diesem vor Vormontage-Zustand ist die Membran 34 bereits mit der Ventilspindel 32 verbunden und ein Druckstück 90 innerhalb der radial innen liegenden Klemmbüchse 54 angeordnet. Die Klemmbüchse 54 ist abschnittsweise von der Klemmbüchse 58 umgeben. Eine statische Verklemmung wird mittels der innenliegenden Klemmbüchse 54 erreicht, womit sich der innenliegende Klemmabschnitt 42 unmittelbar an dem Einschraubende 60 abstützt. Der radial außenliegende Klemmabschnitt 40 stützt sich über die Klemmbüchse 58, die Tellerfedern 62 und 63 und das Gegenlagerelement 56 an dem Einschraubende 60 ab. Damit ergibt sich eine mittelbare Abstützung des Klemmabschnitts 40 an dem Einschraubende 60 über die als Vorspanneinrichtung bezeichenbaren Tellerfedern 62 und 63.

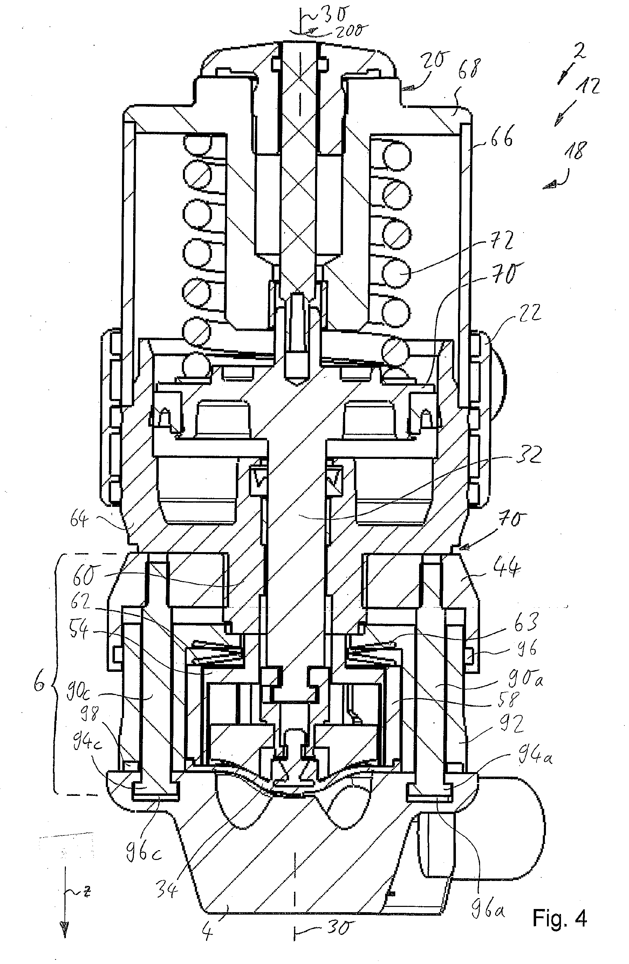

Figur 4 zeigt analog zum Schnitt A-A aus Figur 2 eine Ausführungsform des Membranventils 2. Im Unterschied zur Ausführungsform der Figur 2 ist das Topf-förmig ausgebildete Spannstück 44 in einem dem Ventilkörper 4 abgewandten Bereich des Zwischenabschnitts 6 angeordnet. Verbindungsmittel 90a, 90c sind im Wesentlichen starr mit dem Spannstück 44 verbunden, beispielsweise in das Spannstück 44 eingeschraubt, und führen durch Durchgangsöffnungen eines Zwischenstücks 92. Ein jeweiliger Kopf 94 eines der Verbindungsmittel 90a, 90c greift in einen Hinterschnitt einer im Ventilkörper 4 eingebrachten Nut 96 ein und legt damit die Antriebsbaugruppe 12 formschlüssig entlang der Zustellachse 30 zu dem Ventilkörper 4 fest. Ein Eindrehen des Einschraubendes 60 in das Spannstück 44 bewirkt zum einen eine statische Klemmung mittels der innen liegenden Klemmbüchse 54. Des Weiteren stützt sich die Tellerfeder 63 unmittelbar und direkt an dem Zwischenstück 92 ab und drückt die Tellerfeder 62 sowie die radial außen liegende Klemmbüchse 58 in Richtung des Ventilkörpers 4 zu einer dynamischen Klemmung der Membran 34. Das Spannstück 44 weist eine dem Ventilkörper 4 zugewandte innenliegende Nut 96 zur Aufnahme eines O-Rings und zur Abdichtung zwischen Spannstück 44 und Zwischenstück 92 auf. Das Zwischenstück weist eine dem Ventilkörper 4 zugewandte Ringnut 98 zur Aufnahme eines O-Rings auf.

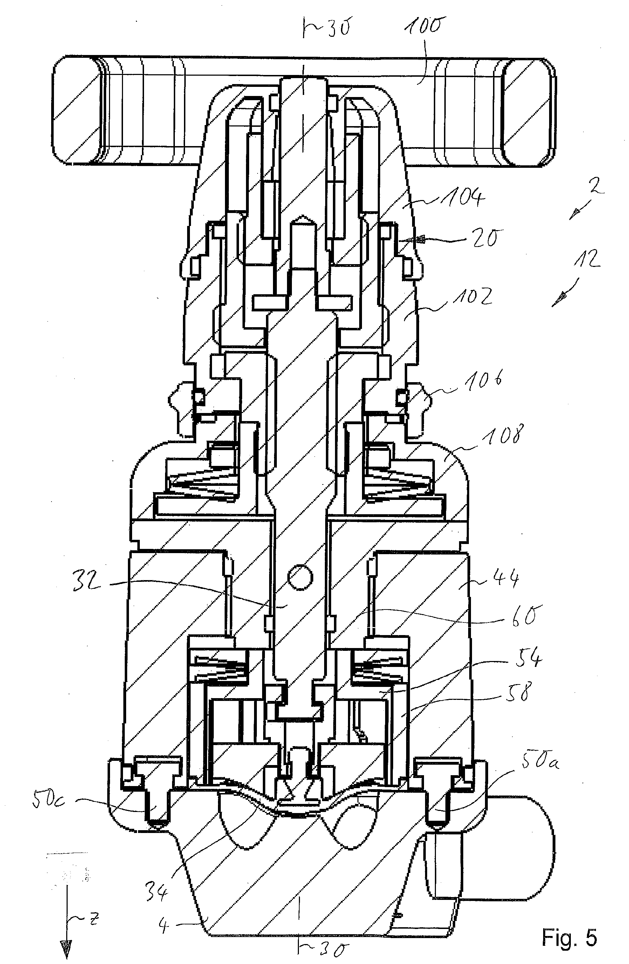

Figur 5 zeigt analog zum Schnitt A-A aus Figur 2 eine Ausführungsform des Membranventils 2. Im Unterschied zur Ausführungsform der Figur 2 ist ein Handmittel 100 in Form eines Handrades zur Verstellung der Membranposition vorgesehen. Durch Verdrehung des Handmittels 100 um die Zustellachse 30 wird die Ventilspindel 32 mittels eines nicht näher bezeichneten Gewindeabschnitts entlang der Zustellachse 30 bewegt. Das Spannstück 44 hingegen ist im Wesentlichen analog zum Spannstück der Figur 2 ausgebildet. Das Handmittel 100 ist einstückig mit einem Ring 102 verbunden. Der Ring 102 weist auf einer von dem Ventilkörper 4 abgewandten Seite die Angriffskontur 20 auf. Die Angriffskontur 20 ist im Normalbetrieb mittels einer Haube 104 verdeckt. Zu einer Montage wird der Ring 102 mittels eines nicht gezeigten Verriegelungsglieds zu einem weiteren Ring 106, einem Gehäuseteil 108 und damit zu dem Einschraubende 60 festgelegt. Ein über die Angriffskontur 20 in die Antriebsbaugruppe 12 eingebrachtes Drehmoment ist somit in das Einschraubende 60 einbringbar, womit eine Verklemmung der Membran 34 durchgeführt wird.

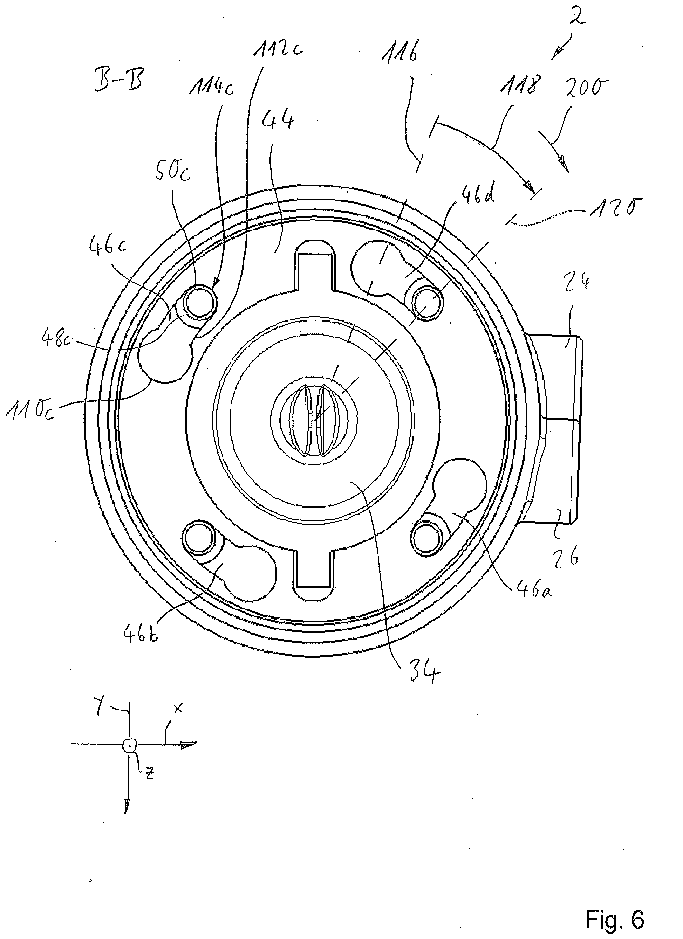

Figur 6 zeigt eine schematische Schnittansicht des Membranventils 2 aus Figur 2 gemäß einem Schnitt B-B. Das Spannstück 44 weist die erläuterten Nuten 46 auf, in welche die Köpfe 48 der Verbindungsmittel 50 eingreifen. Die Nuten 46 verlaufen entlang einer gedachten Kreisbahn, welche ihren Mittelpunkt auf der Zustellachse 30 hat und lotrecht zu der Zustellachse 30 verläuft. Die Nut 46 umfasst einen Steckabschnitt 110 zum Einführen des zugeordneten Kopfes 48. Entlang eines Kreisbahnabschnitts 112 verläuft die Nut mit einem den Kopf 48 umgreifenden Hinterschnitt und endet in einem Verdrehabschnitt 114, welche einen Anschlag für das Verbindungsmittel 50 bereitstellt. In der Steckposition 116 können die Verbindungsmittel 50 über den Steckabschnitt 110 in die entsprechende Nut 46 eingeführt werden. Durch eine Verdrehung des Spannstücks 44 um einen Winkel 118 in die Montage-Drehrichtung 200 wird die Drehposition 120 erreicht, in der das Spannstück 44 zumindest entlang der Zustellachse 30 zu dem Ventilkörper 4 formschlüssig festgelegt ist. Durch ein Eindrehen des Einschraubendes 60 in die Montage-Drehrichtung 200 wird die Verklemmung der Membran 34 erreicht. Der Winkel 118 beträgt vorliegend 23°, kann selbstverständlich aber auch anders gewählt werden, beispielsweise kleiner 45°, kleiner 30° oder aber auch kleiner 25°.

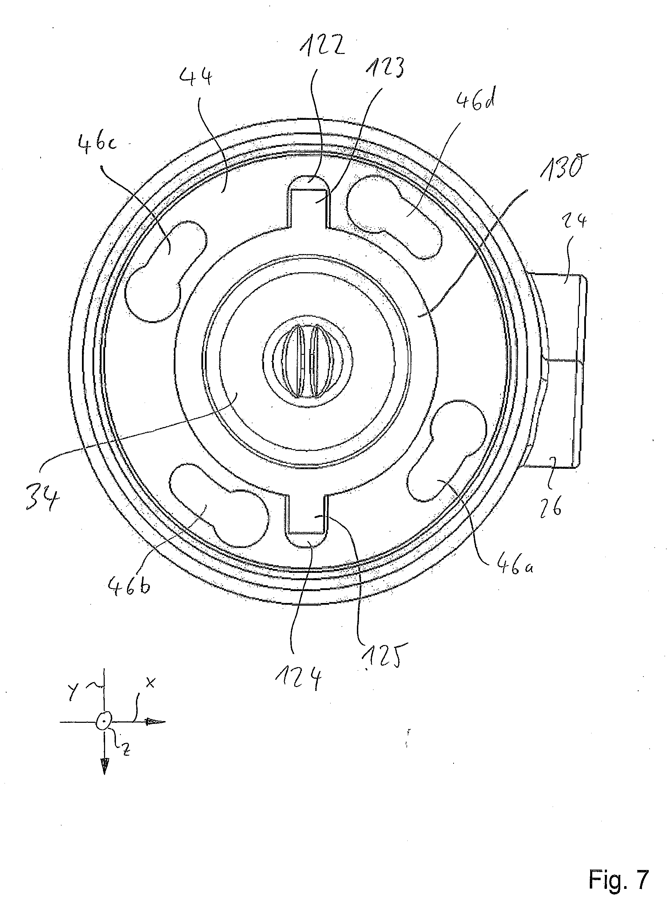

Figur 7 zeigt eine schematische Ansicht auf die Antriebsbaugruppe 12 aus Figur 3 entgegen der Zustellrichtung z. Das Spannstück 44 weist zwei Ausnehmungen 122 und 124 auf, in welche Laschen 123 und 125 der Membran 34 eingreifen, um die Position der Membran 34 zu dem Spannstück 44 festzulegen. Des Weiteren ist ein Klemmabschnitt 130 der Membran 34 gezeigt, welcher sich radial außen liegend befindet und zur vorangehend beschriebenen Verklemmung zwischen den Klemmabschnitten und dem Ventilkörper 4 vorgesehen ist.

Vorliegend sind sowohl die Nuten 46 als auch die korrespondierenden Verbindungsmittel 50 symmetrisch und umfangsseitig gleich weit voneinander beabstandet angeordnet. In einer abweichenden Ausführungsform können die Nuten 46 und die zugehörigen Verbindungsmittel 50 asymmetrisch um die Zustellachse 30 verteilt angeordnet sein, um eine gewünschte Orientierung der Membrane 34 zu dem Ventilsitz sicherzustellen.

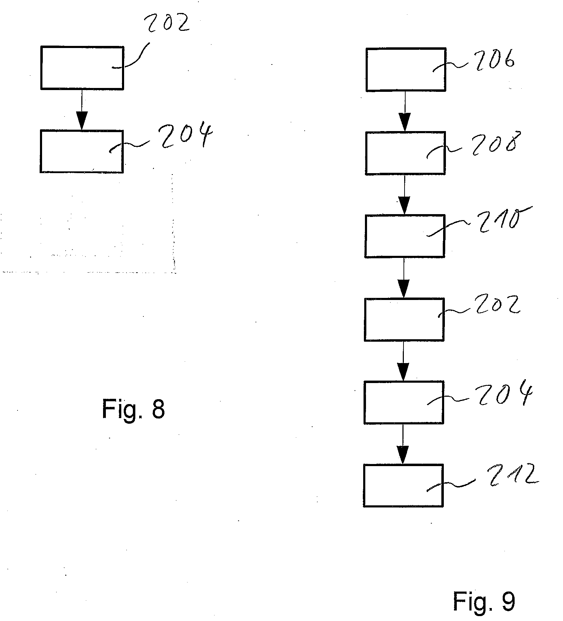

Figur 8 zeigt ein schematisches Ablaufdiagramm zur Montage der Antriebsbaugruppe 12 an dem Ventilkörper 4. In einem Schritt 202 wird das Spannstück 44 in die Montage-Drehrichtung 200 um die Zustellachse 30 zu dem Ventilkörper 4 festgelegt. In einem Schritt 204 wird das Einschraubende 60 derart in das Spannstück 44 in die Montage-Drehrichtung 200 um die Zustellachse 30 eingeschraubt, sodass das Einschraubende 60 den Klemmabschnitt 40 und 42 mit Druck belastet und damit die Membran 34 zwischen dem jeweiligen Klemmabschnitt 40, 42 und dem Ventilkörper 4 verklemmt.

Figur 9 zeigt ein weiteres schematisches Ablaufdiagramm zur Montage der Antriebsbaugruppe 12. In einem ersten Schritt 206 wird die Antriebsbaugruppe 12 vormontiert, sodass sie beispielsweise dem Zustand in Figur 3 entspricht. In einem Schritt 208 wird die Antriebsbaugruppe 12 im Wesentlichen entlang der Zustellachse 30 dem Ventilkörper 4 zugeführt. In einem Schritt 210 wird die Antriebsbaugruppe 12 auf den Ventilkörper 4 aufgesteckt wie beispielsweise gemäß der Steckposition 116. Auf den Schritt 210 folgt der Schritt 202. Auf den Schritt 202 folgt der Schritt 204. In einem Schritt 212 ist die Montage abgeschlossen. Selbstverständlich kann die Antriebsbaugruppe 12 wieder von dem Ventilkörper 4 entfernt, also demontiert werden, indem die Antriebsbaugruppe 12 entgegen der Montage-Drehrichtung 200 verdreht wird.

## Patentansprüche

1. Eine Antriebsbaugruppe (12) eines Membranventils (2) zur Anordnung an einem Ventilkörper (4), wobei die Antriebsbaugruppe (12) einen Klemmabschnitt (40; 42) zu einem Verklemmen einer mit dem Ventilkörper (4) zusammenwirkenden Membran (34) umfasst, wobei ein Spannstück (44) der Antriebsbaugruppe (12) derart ausgebildet ist, sodass durch eine Verdrehung des Spannstücks (44) in eine Montage-Drehrichtung (200) um eine Zustellachse (30) das Spannstück (44) zumindest entlang der Zustellachse (30) zu dem Ventilkörper (4) festlegbar ist, **dadurch gekennzeichnet,**
- **dass** ein Einschraubende (60) derart in das Spannstück (44) in die Montage-Drehrichtung (200) um die Zustellachse (30) einschraubbar ist, so dass das Einschraubende (60) den Klemmabschnitt (40; 42) mit Druck belastet und damit die Membran (34) zwischen dem Klemmabschnitt (40; 42) und dem Ventilkörper (4) verklemmbar ist.

2. Die Antriebsbaugruppe (12) nach Anspruch 1, wobei das Spannstück (44) innerhalb eines Gehäuseabschnitts (14) angeordnet ist, welcher zwischen einem Antriebsgehäuse (18) und dem Ventilkörper (4) angeordnet ist.

3. Die Antriebsbaugruppe (12) nach dem Anspruch 1 oder 2, wobei sich eine Oberfläche des Gehäuseabschnitts (14) und/oder des Spannstücks (44) im Wesentlichen bündig an eine Oberfläche des Antriebsgehäuses (18) und/oder bündig an eine Oberfläche des Ventilkörpers (4) anschließt.

4. Die Antriebsbaugruppe (12) nach einem der vorstehenden Ansprüche umfassend ein Zwischenstück (92), wobei das Spannstück (44) in Richtung des Ventilkörpers (4) durch das Zwischenstück (92) geführte Verbindungsmittel (90a, 90c) umfasst, und wobei das Zwischenstück (92) sich an dem Einschraubende (60) abstützt.

5. Die Antriebsbaugruppe (12) nach einem der vorstehenden Ansprüche, wobei der Klemmabschnitt (42) sich unmittelbar an dem Einschraubende (60) abstützt.

6. Die Antriebsbaugruppe (12) nach einem der vorstehenden Ansprüche, wobei der Klemmabschnitt (40) sich mittels einer Vorspanneinrichtung (62, 63) an dem Einschraubende (60) abstützt.

7. Die Antriebsbaugruppe (12) nach einem der vorstehenden Ansprüche, wobei das Spannstück (44) einen Verbindungsabschnitt umfasst, welcher derart ausgebildet ist, um eine Steck-Dreh-Verbindung zwischen dem Spannstück (44) und dem Ventilkörper (4) herzustellen.

8. Die Antriebsbaugruppe (12) nach dem Anspruch 7, wobei die Steck-Dreh-Verbindung eine Steckposition (116) des Spannstücks (44) zu dem Ventilkörper (4) bereitstellt, in welcher sich das Spannstück (44) und der Ventilkörper (4) entlang der Zustellachse (30) bewegen lassen, wobei die Steck-Dreh-Verbindung eine Drehposition (120) des Spannstücks (44) zu dem Ventilkörper (4) bereitstellt, in welcher eine Bewegung des Spannstücks (44) und des Ventilkörpers (4) zueinander entlang der Zustellachse (30) begrenzt ist.

9. Die Antriebsbaugruppe (12) nach Anspruch 8, wobei das Spannstück (44) zwischen der Steckposition (116) und der Drehposition (120) einen Winkel kleiner 45°, insbesondere kleiner 30° und insbesondere kleiner 25°, durchläuft.

10. Die Antriebsbaugruppe (12) nach einem der vorstehenden Ansprüche, wobei die Antriebsbaugruppe (12) eine Angriffskontur (20) zum Angreifen eines Werkzeugs umfasst, um ein in die Montage-Drehrichtung (200) gerichtetes Drehmoment in die Antriebsbaugruppe (12) einzubringen.

11. Die Antriebsbaugruppe (12) nach dem Anspruch 10 umfassend ein Antriebsgehäuse (18), wobei die Angriffskontur (20) drehfest mit dem Antriebsgehäuse (18) verbunden ist, und wobei das Einschraubende (60) drehfest mit dem Antriebsgehäuse (18) verbunden ist.

12. Die Antriebsbaugruppe (12) nach dem Anspruch 10, wobei die Angriffskontur (20) drehfest mit einem Handmittel (100) zur manuellen Verstellung einer Membranposition verbunden ist, und wobei mittels eines Verriegelungsglieds das Einschraubende (60) und die Angriffskontur (20) zur Montage/Demontage drehfest miteinander verbindbar sind.

13. Die Antriebsbaugruppe (12) nach einem der Ansprüche 1 bis 11, wobei ein Pneumatikkolben (70) innerhalb eines Zylinders geführt eine Ventilspindel (32) bewegt, wobei ein Anschlussring (22) um die Zustellachse (30) drehbar an dem Antriebsgehäuse (18) gelagert ist, wobei der Anschlussring (22) einen Steuerluftanschluss (24; 26) umfasst, dessen Öffnung in einen durch den Anschlussring (22) und das Antriebsgehäuse (18) gebildeten Steuerluftkanal führt, und wobei der Steuerluftkanal und ein Zylinderraum (74; 72) des Zylinders fluidführend miteinander verbunden sind.

14. Ein Membranventil (2) umfassend eine auf einem Ventilkörper (4) montierte Antriebsbaugruppe (12) nach einem der vorstehenden Ansprüche.

15. Ein Verfahren zur Montage einer Antriebsbaugruppe (12) eines Membranventils (2) an einem Ventilkörper (4), wobei die Antriebsbaugruppe (12) einen Klemmabschnitt (40; 42) zu einem Verklemmen einer mit dem Ventilkörper (4) zusammenwirkenden Membran (34) umfasst, wobei durch eine Verdrehung eines Spannstücks (44) in eine Montage-Drehrichtung (200) um eine Zustellachse (30) das Spannstück (44) zumindest entlang der Zustellachse (30) zu dem Ventilkörper (4) festgelegt wird, **dadurch gekennzeichnet,**
- **dass** ein Einschraubende (60) in das Spannstück (44) in die Montage-Drehrichtung (200) um die Zustellachse (30) derart eingeschraubt wird, so dass das Einschraubende (60) den Klemmabschnitt (40; 42) mit Druck belastet und damit die Membran (34) zwischen dem Klemmabschnitt (40; 42) und dem Ventilkörper (4) verklemmt.

## Claims

1. A drive assembly (12) of a diaphragm valve (2) to be arranged on a valve body (4), the drive assembly (12) comprising a clamping portion (40; 42) for clamping a diaphragm (34) interacting with the valve body (4), a clamping piece (44) of the drive assembly (12) being designed such that the clamping piece (44) can be fixed to the valve body (4) at least along a feed axis (30) by a rotation of the clamping piece (44) in a mounting direction of rotation (200) about the feed axis (30), **characterized in that**
- a screw-in end (60) can be screwed into the clamping piece (44) in the mounting direction of rotation (200) about the feed axis (30) such that the screw-in end (60) loads the clamping portion (40; 42) with pressure and thus the diaphragm (34) can be clamped between the clamping portion (40; 42) and the valve body (4).

2. The drive assembly (12) according to claim 1, wherein the clamping piece (44) is arranged within a housing portion (14) which is arranged between a drive housing (18) and the valve body (4).

3. The drive assembly (12) according to claim 1 or claim 2, wherein a surface of the housing portion (14) and/or of the clamping piece (44) is substantially flush with a surface of the drive housing (18) and/or flush with a surface of the valve body (4).

4. The drive assembly (12) according to any of the preceding claims comprising an intermediate piece (92), wherein the clamping piece (44) comprises connecting means (90a, 90c) guided towards the valve body (4) through the intermediate piece (92), and wherein the intermediate piece (92) is supported on the screw-in end (60).

5. The drive assembly (12) according to any of the preceding claims, wherein the clamping portion (42) is supported directly on the screw-in end (60).

6. The drive assembly (12) according to any of the preceding claims, wherein the clamping portion (40) is supported on the screw-in end (60) by means of a biasing device (62, 63).

7. The drive assembly (12) according to any of the preceding claims, wherein the clamping piece (44) comprises a connecting portion which is designed to produce a plug-and-turn connection between the clamping piece (44) and the valve body (4).

8. The drive assembly (12) according to claim 7, wherein the plug-and-turn connection provides a plug-in position (116) of the clamping piece (44) with respect to the valve body (4), in which position the clamping piece (44) and the valve body (4) can move along the feed axis (30), wherein the plug-and-turn connection provides a rotational position (120) of the clamping piece (44) with respect to the valve body (4), in which position a movement of the clamping piece (44) and the valve body (4) relative to each other along the feed axis (30) is limited.

9. The drive assembly (12) according to claim 8, wherein the clamping piece (44) passes through an angle smaller than 45°, in particular smaller than 30° and more particularly smaller than 25°, between the plug-in position (116) and the rotational position (120).

10. The drive assembly (12) according to any of the preceding claims, wherein the drive assembly (12) comprises an engagement contour (20) for engaging a tool in order to introduce a torque directed in the mounting direction of rotation (200) into the drive assembly (12).

11. The drive assembly (12) according to claim 10 comprising a drive housing (18), wherein the engagement contour (20) is rotationally fixed to the drive housing (18), and wherein the screw-in end (60) is rotationally fixed to the drive housing (18).

12. The drive assembly (12) according to claim 10, wherein the engagement contour (20) is rotationally fixed to manual means (100) for manually adjusting a diaphragm position, and wherein the screw-in end (60) and the engagement contour (20) are rotationally fixed to each other, for mounting/removing, by means of a locking member.

13. The drive assembly (12) according to any of claims 1 to 11, wherein a pneumatic piston (70) guided inside a cylinder moves a valve spindle (32), wherein a supply ring (22) is mounted on the drive housing (18) so as to be rotatable about the feed axis (30), wherein the supply ring (22) has a control air supply (24; 26), the opening of which leads into a control air passage formed by the supply ring (22) and the drive housing (18), and wherein the control air passage and a cylinder chamber (74; 72) of the cylinder are interconnected so as to conduct fluid.

14. A diaphragm valve (2) comprising a drive assembly (12) according to any of the preceding claims mounted on a valve body (4).

15. A method for mounting a drive assembly (12) of a diaphragm valve (2) on a valve body (4), wherein the drive assembly (12) has a clamping portion (40; 42) for clamping a diaphragm (34) interacting with the valve body (4), the clamping piece (44) being fixed to the valve body (4) at least along a feed axis (30) by a rotation of a clamping piece (44) in a mounting direction of rotation (200) about the feed axis (30), **characterized in that**
- a screw-in end (60) is screwed into the clamping piece (44) in the mounting direction of rotation (200) about the feed axis (30) such that the screw-in end (60) loads the clamping portion (40; 42) with pressure and thus the diaphragm (34) is clamped between the clamping portion (40; 42) and the valve body (4).

## Revendications

1. Ensemble d'entraînement (12) d'une soupape à membrane (2) destiné à être agencé sur un corps de soupape (4), dans lequel l'ensemble d'entraînement (12) comprend une section de blocage (40; 42) destinée à bloquer une membrane (34) coopérant avec le corps de soupape (4), dans lequel une pièce de serrage (44) de l'ensemble d'entraînement (12) est conçue de sorte que la pièce de serrage (44) peut être fixée au corps de soupape (4) au moins le long d'un axe de réglage (30), par une rotation de la pièce de serrage (44) dans une direction de rotation-de montage (200) autour de l'axe de réglage (30), **caractérisé en ce que**
- une extrémité filetée (60) peut être vissée dans la pièce de serrage (44) dans la direction de rotation-de montage (200) autour de l'axe de réglage (30), de sorte que l'extrémité filetée (60) de la section de blocage (40, 42) est chargée par pression et ainsi la membrane (34) peut être bloquée entre la section de blocage (40, 42) et le corps de soupape (4).

2. Ensemble d'entraînement (12) selon la revendication 1, dans lequel la pièce de serrage (44) est agencée dans une section de boîtier (14), laquelle est agencée entre un boîtier d'entraînement (18) et le corps de soupape (4).

3. Ensemble d'entraînement (12) selon la revendication 1 ou 2, dans lequel une surface de la section de boîtier (14) et/ou de la pièce de serrage (44) se connecte affleurant sensiblement à une surface supérieure du boîtier d'entraînement (18) et/ou affleurant à une surface supérieure du corps de soupape (4).

4. Ensemble d'entraînement (12) selon l'une quelconque des revendications précédentes, comprenant une pièce intermédiaire (92), dans lequel la pièce de serrage (44) comprend des moyens de connexion (90a, 90c) guidés à travers la pièce intermédiaire (92) dans la direction du corps de soupape (4), et dans lequel la pièce intermédiaire (92) est supportée au niveau de l'extrémité filetée (60).

5. Ensemble d'entraînement (12) selon l'une quelconque des revendications précédentes, dans lequel la section de blocage (42) est supportée directement sur l'extrémité filetée (60).

6. Ensemble d'entraînement (12) selon l'une quelconque des revendications précédentes, dans lequel la section de blocage (40) est supportée sur l'extrémité filetée (60) par l'intermédiaire d'un dispositif de sollicitation (62, 63).

7. Ensemble d'entraînement (12) selon l'une quelconque des revendications précédentes, dans lequel la pièce de serrage (44) comprend une section de connexion, laquelle est conçue pour établir une connexion d'enfichage et rotation entre la pièce de serrage (44) et le corps de soupape (4).

8. Ensemble d'entraînement (12) selon la revendication 7, dans lequel la connexion d'enfichage et rotation fournit une position d'enfichage (116) de la pièce de serrage (44) par rapport au corps de soupape (4), dans lequel la pièce de serrage (44) et le corps de soupape (4) se déplacent le long de l'axe de réglage (30), dans lequel la connexion d'enfichage et rotation fournit une position de rotation (120) de la pièce de serrage (44) par rapport au corps de soupape (4), dans laquelle un déplacement de la pièce de serrage (44) et du corps de soupape (4) l'un par rapport à l'autre le long l'axe de réglage (30) est limité.

9. Ensemble d'entraînement (12) selon la revendication 8, dans lequel la pièce de serrage (44) passe de la position d'enfichage (116) à la position de rotation (120) selon un angle inférieur à 45°, en particulier inférieur à 30° et en particulier inférieur à 25°.

10. Ensemble d'entraînement (12) selon l'une quelconque des revendications précédentes, dans lequel l'ensemble d'entraînement (12) comprend un contour de mise en prise (20) pour venir en prise avec un outil, afin d'introduire un couple de rotation dirigé dans la direction de rotation-de montage (200) dans l'ensemble d'entraînement (12).

11. Ensemble d'entraînement (12) selon la revendication 10, comprenant un boîtier d'entraînement (18), dans lequel le contour de mise en prise (20) est connecté de manière solidaire en rotation au boîtier d'entraînement (18), et dans lequel l'extrémité filetée (60) est connectée de manière solidaire en rotation au boîtier d'entraînement (18).

12. Ensemble d'entraînement (12) selon la revendication 10, dans lequel le contour de mise en prise (20) est connecté de manière solidaire en rotation avec des moyens manuels (100) pour un réglage manuel d'une position de membrane, et dans lequel l'extrémité filetée (60) et le contour de mise en prise (20) sont connectés l'un à l'autre d'une manière solidaire en rotation pour un montage/démontage au moyen d'un élément de verrouillage.

13. Ensemble d'entraînement (12) selon l'une quelconque des revendications 1 à 11, dans lequel un piston pneumatique (70) déplace une tige de soupape (32) guidée à l'intérieur d'un cylindre, dans lequel une bague de raccordement (22) est montée de manière rotative autour de l'axe de réglage (30) sur le boîtier d'entraînement (18), dans lequel la bague de raccordement (22) comprend un raccord d'air de commande (24; 26), dont l'ouverture débouche dans un canal d'air de commande formé à travers la bague de raccordement (22) et le boîtier d'entraînement (18), et dans lequel le canal d'air de commande et un espace de cylindre (74 ; 72) du cylindre sont reliés l'un à l'autre de manière fluidique.

14. Soupape à membrane (2) comprenant un ensemble d'entraînement (12) monté sur un corps de soupape (4) selon l'une quelconque des revendications précédentes.

15. Procédé de montage d'un ensemble d'entraînement (12) d'une soupape à membrane (2) sur un corps de soupape (4), dans lequel l'ensemble d'entraînement (12) comprend une section de blocage (40; 42) destinée à bloquer une membrane (34) coopérant avec le corps de soupape (4), dans lequel une pièce de serrage (44) peut être fixée au corps de soupape (4) au moins le long d'un axe de réglage (30), par une rotation de la pièce de serrage (44) dans une direction de rotation-de montage (200) autour de l'axe de réglage (30), **caractérisé en ce que**
- une extrémité filetée (60) est vissée dans la pièce de serrage (44) dans la direction de rotation-de montage (200) autour de l'axe de réglage (30), de sorte que l'extrémité filetée (60) de la section de blocage (40; 42) est chargée par pression et ainsi la membrane (34) est bloquée entre la section de blocage (40 ; 42) et le corps de soupape (4).
